# EUROPÄISCHE PATENTSCHRIFT

(11) **EP 2 044 171 B1**
(45) Veröffentlichungstag und Bekanntmachung des Hinweises auf die Patenterteilung: **24.01.2018**
(21) Anmeldenummer: 07787711.6
(22) Anmeldetag: 19.07.2007
(51) Int. Cl.: C09K 11/80

(54) **LICHTQUELLE UND LEUCHTSTOFFSCHICHT FÜR EINE LICHTQUELLE**
LIGHT SOURCE AND FLUORESCENT MATERIAL LAYER FOR A LIGHT SOURCE
SOURCE LUMINEUSE ET COUCHE DE SUBSTANCES FLUORESCENTES POUR SOURCE LUMINEUSE

(30) Priorität: 24.07.2006 DE 102006034139
(43) Veröffentlichungstag der Anmeldung: 08.04.2009
(73) Patentinhaber: LEDVANCE GmbH, 85748 Garching (DE)
(72) Erfinder: KONRAD, Armin, 86845 Grossaitingen (DE); JERMANN, Frank, 86343 Königsbrunn (DE); ZACHAU, Martin, 82269 Geltendorf (DE)
(74) Vertreter: Nordmeyer, Philipp Werner
(86) Internationale Anmeldenummer: PCT/EP2007/057453
(87) Internationale Veröffentlichungsnummer: WO 2008/012257

(56) Entgegenhaltungen:
- EP-A- 1 278 250
- WO-A-2004/038815
- WO-A-2004/085570

## Beschreibung

### Technisches Gebiet

Die Erfindung betrifft eine Lichtquelle gemäß dem Oberbegriff des Anspruchs 1.

### Stand der Technik

Aus dem allgemeinen Stand der Technik ist es zur Erzeugung von Lichtspektren im gelben Farbbereich beispielsweise bekannt, herkömmliche stabförmige Leuchtstofflampen, die weißes Licht emittieren, mit einem gelben Schrumpfschlauch zu überziehen, der als Farbfilter dient. Dieser Farbfilter absorbiert die unerwünschten Anteile im Lichtspektrum der Lampe, so dass der gewünschte gelbe Farbort erreicht wird. Nachteilig bei derartigen Lichtquellen ist zum Einen, dass der Farbfilter einen großen Teil der optischen Strahlung absorbiert und dadurch die Effizienz der Leuchtstofflampe reduziert und zum Anderen ein zusätzlicher Montage- und Kostenaufwand notwendig ist, um den als Farbfilter notwendigen Schrumpfschlauch auf der Leuchtstofflampe zu montieren. Des Weiteren ist nachteilig, dass der Schrumpfschlauch bei Leuchtmitteln mit kompakten Bauformen, beispielsweise bei Kompaktleuchtstofflampen oder Leuchtdioden, aufgrund der komplexen Geometrie derartiger Lampengefäße nicht anwendbar ist.

Die EP 1 278 250 A2 offenbart eine Beleuchtungseinheit mit mindestens einer LED als Lichtquelle, die einen SiAION-Leuchtstoff aufweist. Die WO 2004/038815 beschreibt eine Halbleiter-Weisslichtquelle, die als Leuchtstoff ein Alpha-Sialonmaterial verwendet, das durch zweiwertiges Europium aktiviert ist. Die WO 2004/085570 offenbart einen Leuchtstoff auf Strontium-Silikat-Basis und eine LED mit diesem Leuchtstoff.

### Darstellung der Erfindung

Der Erfindung liegt die Aufgabe zugrunde, eine Lichtquelle und eine Leuchtstoffschicht zu schaffen, bei denen gegenüber herkömmlichen Lösungen eine effiziente Lichtemission im gelben Spektralbereich bei minimalem vorrichtungstechnischen Aufwand ermöglicht ist.

Diese Aufgabe wird durch eine Lichtquelle mit den Merkmalen aus dem Patentanspruch 1 gelöst. Besonders vorteilhafte Ausführungen der Erfindung sind in den abhängigen Ansprüchen beschrieben.

Bei der erfindungsgemäßen Lösung kann aufgrund der ein gelbes Lichtspektrum mit dem gewünschten Farbort emittierenden Leuchtstoffsschicht, gegenüber dem Stand der Technik, auf einen Farbfilter, beispielsweise einen gelben Schrumpfschlauch, verzichtet werden, so dass eine effiziente Lichtemission im gelben Spektralbereich bei minimalem vorrichtungstechnischen Aufwand ermöglicht ist. Mit anderen Worten - erfindungsgemäß erfolgt über die Leuchtstoffschicht eine direkte Umwandlung der von der Lampenfüllung emittierten UV-Primärstrahlung in sichtbare Strahlung im gewünschten gelben Wellenlängenbereich. Die Lichtfarbe und Farbwiedergabe werden hierbei durch die Art des verwendeten Leuchtstoffs bestimmt. Neben dem ein Lichtspektrum im gelben Bereich emittierenden Leuchtstoff kann die Leuchtstoffschicht noch weitere Leuchtstoffe oder mehrere gleich oder unterschiedlich ausgebildete Leuchtstoffschichten aufweisen. Da der Einsatz eines Farbfilters entfällt, ist es weiterhin möglich, besonders kompakte gelbe Lichtquellen, beispielsweise Kompaktleuchtstofflampen oder Leuchtdioden, herzustellen. Derartige Lichtquellen finden beispielsweise bei Effektbeleuchtungen zur Erzeugung von Farbeffekten, als Bühnen- und Schaufensterdekoration oder als Partybeleuchtung Verwendung.

Gemäß einem besonders bevorzugten Ausführungsbeispiel der Erfindung findet eine Leuchtstoffschicht Verwendung, die zumindest einen SiAlON-Leuchtstoff, insbesondere einen alpha-SiAlON-Leuchtstoff aufweist, der ein Lichtspektrum mit einem im Wesentlichen im gelben Bereich liegenden Lampenfarbort emittiert. Derartige Leuchtstoffe zeichnen sich durch eine hohe thermische und mechanische Festigkeit aus, so dass eine gute Farbwiedergabe und hohe Lebensdauer der Lichtquellen erreicht wird.

Die Leuchtstoffschicht weist bei einem bevorzugten Ausführungsbeispiel der Erfindung eine CaAlSiN:Eu-Verbindung, vorzugsweise eine Ca_{1.5}Al₃Si₉N₁₆:Eu(5%)-Verbindung auf.

Als besonders vorteilhaft hat es sich erwiesen, wenn die Leuchtstoffschicht, beispielsweise durch Beschlämmen, auf eine Innenfläche des Lampengefäßes aufgebracht ist.

Vorzugsweise emittiert die Leuchtstoffschicht ein Lichtspektrum mit einem Lampenfarbort von etwa x/y = 0,535/0,464 auf der CIE-Normfarbtafel mit einem Toleranzbereich von etwa +/- 0,015/0,015.

Bei einem besonders bevorzugten Ausführungsbeispiel der Erfindung ist die Leuchtstoffschicht derart optimiert, dass sie im Wesentlichen ein gelbes Lichtspektrum mit einer dominanten Emissionswellenlänge im Bereich von etwa 570 bis 600 nm, insbesondere von 580 nm emittiert.

### Kurze Beschreibung der Zeichnungen

Nachstehend wird die Erfindung anhand eines bevorzugten Ausführungsbeispiels näher erläutert. Es zeigen:
Figur 1 eine schematische Darstellung einer erfindungsgemäßen als Leuchtstofflampe ausgebildeten Lichtquelle und
Figur 2 ein Emissionsspektrum der Lichtquelle aus Figur 1.

### Bevorzugte Ausführung der Erfindung

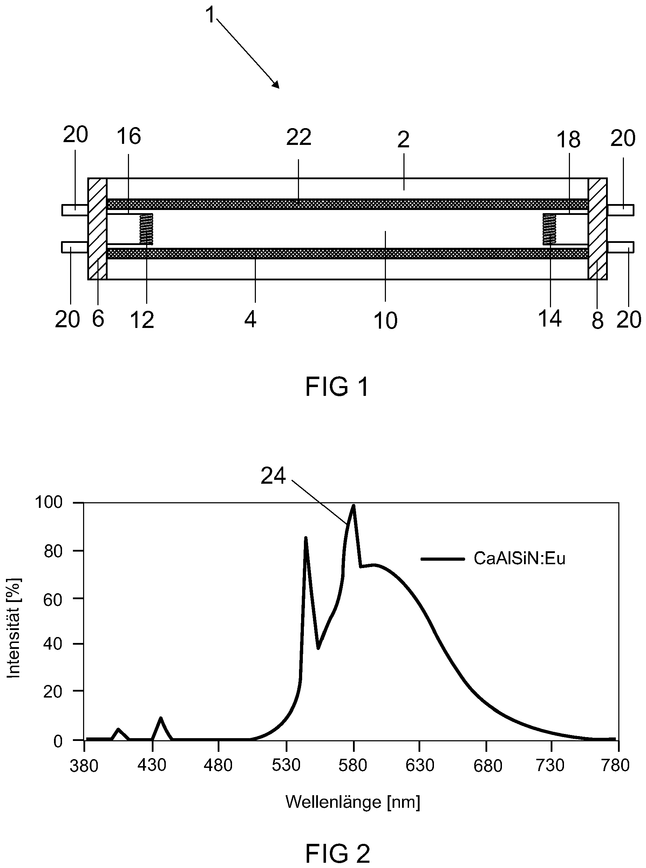

Figur 1 zeigt eine schematische Darstellung einer erfindungsgemäßen, als Leuchtstofflampe 1 ausgebildeten Lichtquelle. Diese besitzt ein etwa stab- bzw. röhrenförmiges Lampengefäß 2 aus Glas, das mit einer Leuchtstoffschicht 4 versehen ist. Das Lampengefäß 2 hat einen beidseitig über Sockelteile 6, 8 abgedichteten Innenraum 10, in den zwei diametral angeordnete Elektroden 12, 14 (Glühwendel) ragen, zwischen denen sich während des Lampenbetriebs eine Gasentladung ausbildet. Die Elektroden 12, 14 sind zur elektrischen Kontaktierung jeweils über Stromzuführungen 16, 18 mit Kontaktstiften 20 verbunden, die die Sockelteile 6, 8 durchsetzen und in Verbindung mit einer entsprechenden Lampenfassung einer Leuchte (nicht dargestellt) einen stabilen mechanischen Halt der Leuchtstofflampe 1 und eine sichere elektrische Kontaktierung ermöglichen. In dem Innenraum 10 des Lampengefäßes 2 ist eine ionisierbare Füllung eingeschlossen, die im Wesentlichen aus einem oder mehreren Edelgasen und einer kleinen Menge Quecksilber besteht. Die Leuchtstoffschicht 4 ist erfindungsgemäß derart optimiert, dass die Leuchtstofflampe 1 ein Lichtspektrum mit einem im Wesentlichen im gelben Bereich liegenden Farbort emittiert. Das heißt, über die Leuchtstoffschicht 4 erfolgt eine direkte Umwandlung der von der Füllung emittierten Primärstrahlung in Strahlung im gewünschten gelben Wellenlängenbereich, so dass ohne Farbfilter eine effiziente Lichtemission im gelben Spektralbereich bei minimalem vorrichtungstechnischen Aufwand ermöglicht ist. Derartige gelbe Leuchtstofflampen 1 finden beispielsweise bei Effektbeleuchtungen zur Erzeugung von Farbeffekten, als Bühnen- und Schaufensterdekoration oder als Partybeleuchtung Verwendung. Da der Einsatz eines Farbfilters entfällt, ist es weiterhin möglich, die Leuchtstofflampe 1 als Kompaktleuchtstofflampe auszubilden. Bei dem dargestellten Ausführungsbeispiel der Erfindung findet eine auf eine Innenfläche 22 des Lampengefäßes 2 aufgebrachte gelbe alpha-SiAlON-Leuchtstoffschicht 4, beispielsweise eine Ca_{1.5}Al₃Si₉N₁₆:Eu(5%)- Leuchtstoffschicht Verwendung, die ein Lichtspektrum mit einem im gelben Bereich liegenden Farbort emittiert. Derartige Leuchtstoffe zeichnen sich durch eine hohe thermische und mechanische Festigkeit aus, so dass eine gute Farbwiedergabe und hohe Lebensdauer der Leuchtstofflampe 1 erreicht wird. Vorzugsweise emittiert die Leuchtstoffschicht 4 ein Lichtspektrum mit einem Lampenfarbort von etwa x/y = 0,535/0,464 auf der CIE-Normfarbtafel in einem Toleranzbereich von etwa +/- 0,015/0,015. Die Beschichtung des Lampengefäßes 2 mit der Leuchtstoffschicht erfolgt beispielsweise über eine Suspension, wobei der Leuchtstoff mit einem Binder in einer Flüssigkeit suspendiert wird. Diese Suspension wird in das Lampengefäß 2 gegossen, gesprüht oder pneumatisch gedrückt (Beschlämmvorgang). Die überschüssige Suspension wird anschließend aus dem senkrecht gehaltenen Lampengefäß 2 entfernt. Hierbei kann es vorteilhaft sein, das Lampengefäß 2 mehrfach zu beschichten. Des Weiteren kann zwischen dem Glas des Lampengefäßes 2 und der Leuchtstoffschicht 4 bzw. auf der Leuchtstoffschicht 4 eine Schutz- bzw. Haftvermittlerschicht, beispielsweise aus Silizium- oder Aluminiumoxid, aufgebracht werden.

In Figur 2, die ein Emissionsspektrum der Leuchtstofflampe 1 aus Figur 1 zeigt, ist das Emissionsverhalten der Leuchtstoffschicht 4 durch eine Kurve 24 dargestellt. Die Leuchtstoffschicht 4 ist derart optimiert, dass sie ein gelbes Lichtspektrum mit einer dominanten Emissionswellenlänge im Bereich von etwa 570 bis 600 nm emittiert. Ungewünschte Lichtspektren sind auf ein Minimum reduziert. Bei dem dargestellten Ausführungsbeispiel mit CaAlSiN:Eu-Leuchtstoff liegt die Peakwellenlänge bei etwa 580 nm, d.h. im gewünschten gelben Spektralbereich erreicht die Intensität nahezu 100 %, so dass keine Farbfilter erforderlich sind und eine effiziente Lichtemission im gelben Spektralbereich bei minimalem vorrichtungstechnischen Aufwand ermöglicht ist.

Die erfindungsgemäße Lichtquelle 1 ist nicht auf das dargestellte Ausführungsbeispiel mit stabförmigem Lampengefäß 2 beschränkt, vielmehr kann die Lichtquelle 1 unterschiedliche aus dem Stand der Technik bekannte Lampengefäßformen aufweisen, so kann das Lampengefäß beispielsweise U-förmig oder ringförmig ausgebildet sein, insbesondere kann die Lichtquelle 1 auch als einseitig gesockelte Kompaktleuchtstofflampe ausgebildet sein.

Offenbart ist eine Lichtquelle 1, insbesondere eine Leuchtstofflampe, mit zumindest einem Lampengefäß 2, das mit mindestens einer Leuchtstoffschicht 4 versehen ist, wobei die Leuchtstoffschicht 4 ein Lichtspektrum mit einem im Wesentlichen im gelben Bereich liegenden Farbort emittiert. Des Weiteren offenbart ist eine Leuchtstoffschicht 4 für eine Lichtquelle 1, die ein Lichtspektrum mit einem im Wesentlichen im gelben Bereich liegenden Lampenfarbort emittiert.

## Patentansprüche

1. Lichtquelle mit mindestens einer Leuchtstoffschicht (4), die ein Lichtspektrum mit einem im gelben Bereich liegenden Farbort emittiert, wobei zumindest ein Leuchtstoff der Leuchtstoffschicht (4) ein SiAlON-Leuchtstoff ist, **dadurch gekennzeichnet, dass** die Lichtquelle eine Leuchtstofflampe ist, die zumindest ein Lampengefäß (2) besitzt, in dessen Innenraum eine aus Edelgas und Quecksilber bestehende, ionisierbare Füllung sowie Elektroden (12, 14), zwischen denen sich während des Lampenbetriebs eine Gasentladung ausbildet, angeordnet sind, wobei die Leuchtstoffschicht (4) auf der Innenfläche (22) des Lampengefäßes (2) angeordnet ist.

2. Lichtquelle nach Anspruch 1, wobei der SiAlON-Leuchtstoff, ein alpha-SiAlON-Leuchtstoff ist.

3. Lichtquelle nach Anspruch 1 oder 2, wobei die Leuchtstoffschicht (4) eine CaAISiN:Eu-Verbindung aufweist.

4. Lichtquelle nach Anspruch 3, wobei die CaAlSiN:Eu-Verbindung Ca_{1.5}Al₃Si₉N₁₆:Eu(5%) ist.

5. Lichtquelle nach einem der Ansprüche 1-4, wobei die Leuchtstofflampe eine Kompaktleuchtstofflampe ist.

## Claims

1. Light source with at least one fluorescent material layer (4), emitting a light spectrum with a chromaticity lying in the yellow range, wherein at least one fluorescent material of the fluorescent material layer (4) is a SiAlON fluorescent material, **characterised in that** the light source is a fluorescent lamp having at least one lamp vessel (2), in the inside of which are disposed an ionisable filling consisting of noble gas and mercury and also electrodes (12, 14), between which a gas discharge forms during operation of the lamp, wherein the fluorescent material layer (4) is disposed on the inside surface (22) of the lamp vessel (2).

2. Light source according to claim 1, wherein the SiAlON fluorescent material is an alpha-SiAlON fluorescent material.

3. Light source according to claim 1 or 2, wherein the fluorescent material layer (4) comprises a CaAlSiN:Eu compound.

4. Light source according to claim 3, wherein the CaAlSiN:Eu compound is Ca_{1.5}Al₃Si₉N₁₆:Eu(5%).

5. Light source according to any one of claims 1 to 4, wherein the fluorescent lamp is a compact fluorescent lamp.

## Revendications

1. Source lumineuse avec au moins une couche de substance luminescente (4), qui émet un spectre de lumière avec un lieu de couleur situé dans la gamme jaune, au moins une substance luminescente de la couche de substance luminescente (4) étant une substance luminescente SiAlON, **caractérisée en ce que** la source lumineuse est une lampe fluorescente qui comporte au moins une ampoule de lampe (2) à l'intérieur de laquelle sont placées une atmosphère ionisable constituée de gaz rare et de mercure ainsi que des électrodes (12, 14) entre lesquelles se forme une décharge gazeuse pendant le fonctionnement de la lampe, la couche de substance luminescente (4) étant agencée sur la surface intérieure (22) de l'ampoule de lampe (2).

2. Source lumineuse selon la revendication 1, dans laquelle la substance luminescente SiAlON est une substance luminescente alpha-SiAlON.

3. Source lumineuse selon la revendication 1 ou 2, dans laquelle la couche de substance luminescente (4) comporte un composé CaAlSiN:Eu.

4. Source lumineuse selon la revendication 3, dans laquelle le composé CaAlSiN:Eu est Ca_{1.5}Al₃Si₉N₁₆:Eu(5%).

5. Source lumineuse selon l'une des revendications 1 à 4, dans laquelle la lampe fluorescente est une lampe fluocompacte.
